# EUROPÄISCHE PATENTSCHRIFT

(11) **EP 1 255 929 B1**
(45) Veröffentlichungstag und Bekanntmachung des Hinweises auf die Patenterteilung: **31.05.2006**
(21) Anmeldenummer: 01913599.5
(22) Anmeldetag: 02.02.2001
(51) Int. Cl.: F02M 51/06, F02M 61/16, F02M 45/12, F02M 45/08, F02M 61/20

(54) **BRENNSTOFFEINSPRITZVENTIL UND VERFAHREN ZU DESSEN BETÄTIGUNG**
FUEL INJECTION VALVE AND METHOD FOR OPERATING THE SAME
SOUPAPE D'INJECTION DE CARBURANT ET SON PROCEDE DE COMMANDE

(30) Priorität: 04.02.2000 DE 10004960
(43) Veröffentlichungstag der Anmeldung: 13.11.2002
(73) Patentinhaber: ROBERT BOSCH GMBH, 70442 Stuttgart (DE)
(72) Erfinder: HOHL, Guenther, 70569 Stuttgart (DE)
(86) Internationale Anmeldenummer: PCT/DE2001/000485
(87) Internationale Veröffentlichungsnummer: WO 2001/057392

(56) Entgegenhaltungen:
- DE-A- 1 911 827
- DE-A- 4 403 148
- GB-A- 2 152 135
- US-A- 4 342 443
- US-A- 4 972 996
- PATENT ABSTRACTS OF JAPAN vol. 007, no. 009 (M-185), 14. Januar 1983 (1983-01-14) -& JP 57 168052 A (NISSAN JIDOSHA KK), 16. Oktober 1982 (1982-10-16)

## Beschreibung

### Stand der Technik

Die Erfindung geht aus von einem Brennstoffeinspritzventil nach der Gattung des Anspruchs 1 bzw. von einem Verfahren zum Betätigen eines Brennstoffeinspritzventils nach der Gattung des Anspruchs 9.

Die Schließzeiten von Brennstoffeinspritzventilen werden durch Adhäsionskräfte zwischen Anker und Kern einerseits und durch Wirbelströme andererseits verlängert. Zur Verringerung der Verzögerung ist es bekannt, bei Beendigung des das Brennstoffeinspritzventil erregenden Stromimpulses einen Strom in umgekehrter Richtung durch die Magnetspule fließen zu lassen, um den Abbau des Restfeldes zu beschleunigen. Die Konstruktion entsprechender Steuerelemente ist schwierig und führt auch lediglich zu geringfügigen Verkürzungen der Schließzeit.

Eine andere Möglichkeit besteht darin, ein Magnetfeld zum Öffnen des Brennstoffeinspritzventils und ein zweites Magnetfeld zum Halten des Brennstoffeinspritzventils in seiner geöffneten Stellung aufzubauen. Die Stärke des Haltefeldes kann dann so klein gewählt werden, daß die Wirbelströme nach Abschalten des Haltefeldes klein sind.

Aus der DE 23 06 007 C3 ist ein elektromagnetisch betätigbares Brennstoffeinsnritzventil zum Einspritzen von Brennstoff in eine Brennkraftmaschine bekannt, bei welchem die Magnetspule drei Wicklungen aufweist, welche von drei getrennten Schaltkreisen angesteuert werden. Dabei dient der erste Schaltkreis zum schnellen Öffnen des Brennstoffeinspritzventils, der zweite Schaltkreis zum Offenhalten des Brennstoffeinspritzventils und der dritte zum Erzeugen eines das Restmagnetfeld löschenden Gegenfeldes zum schnellen Schließen des Brennstoffeinspritzventils.

Nachteilig an dem aus der DE 23 06 007 C3 bekannten Brennstoffeinspritzventil ist, daß die Herstellung einer Anordnung mit drei Schaltkreisen, die die drei Wicklungen der Magnetspule ansteuern, sehr aufwendig ist.

Die abgespritzte Brennstoffmenge pro Zeiteinheit ist zudem immer gleich groß, so daß die Zumessung kleinerer Brennstoffmengen im niederen Drehzahlbereich der Brennkraftmaschine über eine erheblich verkürzte Schließzeit und damit über stärkere Rückstellfedern und zwangsläufig erhöhte Ansteuerleistungen der Magnetspulen realisiert werden muß. Dies belastet die elektrischen Komponenten.

Aus der DE 1 911 827 A ist bereits ein Brennstoffeinspritzventil bekannt, das als Einspritzventil für Brennstoffeinspritzanlagen von Brennkraftmaschinen verwendet werden kann. Das als elektromagnetisch betätigbares Ventil ausgebildete Brennstoffeinspritzventil besitzt eine mit einem ersten Anker zusammenwirkende erste Magnetspule und eine mit dem ersten Anker kraftschlüssig in Verbindung stehende, hier einteilig ausgeführte Ventilnadel zur Betätigung eines Ventitschließkörpers, der zusammen mit einer Ventilsitzfläche einen Dichtsitz bildet, wobei der Brennstoff über eine stromabwärts des Dichtsitzes angeordnete Düse abgespritzt wird. Außerdem weist das Brennstoffeinspritzventil eine mit Gleichstrom betreibbare zweite Magnetspule auf, wobei der erste Anker in einer Schließrichtung von einer ersten Rückstellfeder beaufschlagt wird und ein zweiter Anker mit der zweiten Magnetspule so zusammenwirkt, dass bei Bestromen der ersten Magnetspule und der zweiten Magnetspule ein mit der Ventilnadel fest verbundener Anschlagkörper in Form eines radial nach außen stehenden Kragens an dem zweiten Anker anschlägt.

Weiterhin ist dieser Druckschrift zu entnehmen, dass die variable Hubeinstellung am Brennstoffeinspritzventil über die beiden Magnetspulen erfolgt, die konzentrisch zueinander angeordnet sind. Die Anordnung ist derart ausgestaltet, dass bei Bestromen der beiden Magnetspulen sowohl die Ventilnadel mit dem ersten Anker als auch der zweite auf der Ventilnadel bewegliche Anker in Richtung der beiden Magnetspulen, also entgegen der Schließrichtung des Ventils angezogen werden. Je nach Stärke der Bestromung der zweiten Magnetspule kann der zweite Anker, der in einer Schließrichtung von einer zweiten Rückstellfeder beaufschlagt ist, verschieden stark gegen die Federkraft der Rückstellfeder angezogen werden, wodurch eine Hubverstellung der Ventilnadel ermöglicht ist.

### Vorteile der Erfindung

Das erfindungsgemäße Brennstoffeinspritzventil mit den Merkmalen des Anspruchs 1 und das erfindungsgemäße Verfahren mit den Merkmalen des Anspruchs 9 haben demgegenüber den Vorteil, daß die zugemessene Brennstoffmenge pro Zeiteinheit drehzahlabhängig umgeschaltet werden kann, da über das wechselweise Bestromen zweier Magnetspulen, welche mit zwei Ankern zusammenwirken, zwei Schaltstellungen, die wahlweise einzeln angesteuert werden können, zur Verfügung stehen.

Vorteilhaft für die Öffnungsdynamik ist dabei insbesondere das Anbringen eines Anschlagkörpers, welcher je nach Bestromung der Magnetspulen entweder den zweiten Anker in Öffnungsrichtung mitnimmt oder an dem ortsfest gehaltenen zweiten Anker anschlägt.

Durch die in den Unteransprüchen aufgeführten Maßnahmen sind vorteilhafte Weiterbildungen und Verbesserungen des im Anspruch 1 angegebenen Brennstoffeinspritzventils möglich.

Von Vorteil ist insbesondere die durch das aktive Rückschalten des Brennstoffeinspritzventils aus dem geöffneten in den geschlossenen Zustand bedingte hohe Schließdynamik, welche sehr kurze Schließzeiten aus beiden Schaltstellungen ermöglicht.

Durch die passende Dimensionierung der beiden Arbeitsspalte kann das Brennstoffeinspritzventil für jede Schaltstellung die gewünschte Strahlcharakteristik erhalten.

Die erste Schaltstellung mit kleinem Öffnungsquerschnitt ist insbesondere im unteren Drehzahlbereich von Vorteil, da kleine Brennstoffmengen zugemessen werden können.

Von Vorteil ist auch die Möglichkeit, aus der unteren Schaltstellung direkt in die obere Schaltstellung umschalten zu können.

### Zeichnung

Ein Ausführungsbeispiel der Erfindung ist in der Zeichnung vereinfacht dargestellt und in der nachfolgenden Beschreibung näher erläutert. Es zeigen:
- Fig. 1: ein Ausführungsbeispiel eines erfindungsgemäßen Brennstoffeinspritzventils in einer Schnittdarstellung und
- Fig. 2: ein Diagramm des Bestromungszustandes der Magnetspulen für die Schaltstellungen des in Fig. 1 gezeigten Ausführungsbeispiels des erfindungsgemäßen Brennstoffeinspritzventils sowie den jeweils entsprechenden Hub der Ventilnadel als Funktion der Zeit.

### Beschreibung des Ausführungsbeispiels

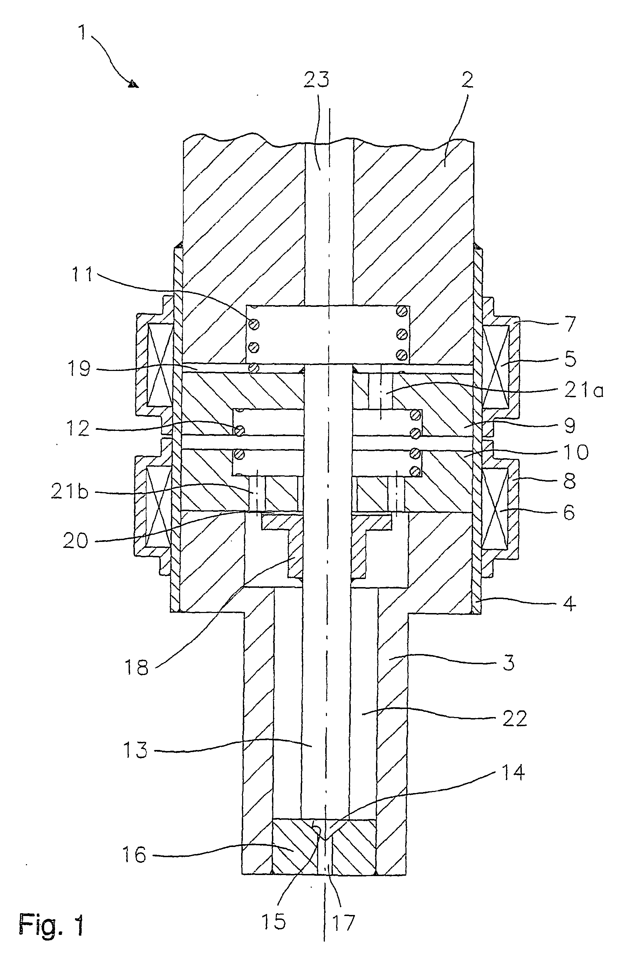

Fig. 1 zeigt in einer auszugsweisen Schnittdarstellung den abspritzseitigen Teil eines Brennstoffeinspritzventils 1. Das Brennstoffeinspritzventil 1 ist insbesondere zum direkten Einspritzen von Brennstoff in einen nicht weiter dargestellten Brennraum einer gemischverdichtenden, fremdgezündeten Brennkraftmaschine geeignet.

Das Brennstoffeinspritzventil 1 umfaßt einen Kern 2 und einen Düsenkörper 3, welche von einem Ventilgehäuse 4 umgeben sind. Eine erste Magnetspule 5 und eine zweite Magnetspule 6 sind am Ventilgehäuse 4 angeordnet und von einem ersten magnetischen Rückflußkörper 7 bzw. einem zweiten magnetischen Rückflußkörper 8 umgeben. Zwischen dem Kern 2 und dem Düsenkörper 3 sind ein erster Anker 9 und ein zweiter Anker 10 angeordnet, welche mit den Magnetspulen 5 und 6 zusammenwirken. Der erste Anker 9 wird durch eine erste Rückstellfeder 11 in Schließrichtung beaufschlagt, während der zweite Anker 10 im Ruhezustand des Brennstoffeinspritzventils 1 auf dem Düsenkörper 3 aufliegt. Zwischen dem ersten Anker 9 und dem zweiten Anker 10 ist eine zweite Rückstellfeder 12 eingespannt, welche den zweiten Anker 10 in Schließrichtung beaufschlagt. Die Federkraft der ersten Rückstellfeder 11 ist erheblich größer als die Federkraft der zweiten Rückstellfeder 12.

Mit dem ersten Anker 9 ist eine Ventilnadel 13 verbunden, welche an ihrem abspritzseitigen Ende einen Ventilschließkörper 14 aufweist. Der Ventilschließkörper 14 bildet zusammen mit einer Ventilsitzfläche 15 einen Dichtsitz und wird durch die erste Rückstellfeder 11 auf der Ventilsitzfläche 15 eines Ventilsitzkörpers 16 in dichtender Anlage gehalten. In dem Ventilsitzkörper 16 ist mindestens eine Abspritzöffnung 17 ausgebildet.

An der Ventilnadel 13 ist ein hülsenförmiger Anschlagkörper 18 formschlüssig angebracht. Zwischen dem ersten Anker 9 und dem Kern 2 ist ein erster Arbeitsspalt 19 ausgebildet. Zwischen dem zweiten Anker 10 und dem Anschlagkörper 18 ist ein zweiter Arbeitsspalt 20 ausgebildet. Dabei ist der erste Arbeitsspalt 19 größer als der zweite Arbeitsspalt 20 bemessen.

Der Brennstoff wird über eine zentrale Brennstoffzufuhr 23 und Brennstoffkanäle 21a, 21b in den Ankern 9 und 10 sowie durch eine zentrale Ausnehmung 22 des Düsenkörpers 3 zum Dichtsitz geführt.

Wird der ersten Magnetspule 5 ein Erregerstrom zugeführt, bewegt sich der erste Anker 9 mit der mit ihm verbundenen Ventilnadel 13 in Öffnungsrichtung. Der Ventilschließkörper 14 hebt von der Ventilsitzfläche 15 ab. Bleibt die zweite Magnetspule 6 unbestromt, so durchläuft der erste Anker 9 einen Hub, welcher der axialen Erstreckung des ersten Arbeitsspalts 19 entspricht. Dabei wird zunächst der erste Anker 9 mit der Ventilnadel 13 und dem daran befestigten Anschlagkörper 18 in Öffnungsrichtung bewegt, bis der Anschlagkörper 18 am zweiten Anker 10 anschlägt. Da der zweite Anker 10 gegen die Kraft der zweiten Rückstellfeder 12 verschiebbar ist, wird er durch die Bewegung der Ventilnadel 13 über den Anschlagkörper 18 in Öffnungsrichtung mitbewegt. Nach Schließen des ersten Arbeitsspaltes 19 ist eine obere Schaltstellung erreicht. Der Brennstoff wird über die Abspritzöffnung 17 in den Brennraum abgespritzt.

Bei niedrigeren Drehzahlen der Brennkraftmaschine wird das Brennstoffeinspritzventil 1 nicht bis in die obere Schaltstellung geöffnet, sondern nur in einer untere Schaltstellung. Der Hubweg entspricht dann der axialen Größe des zweiten Arbeitsspaltes 20. Dazu wird zunächst die zweite Magnetspule 6 bestromt. Dies bewirkt, daß der zweite Anker 10 in Anlage am Düsenkörper 3 gehalten wird. Wird nun die erste Magnetspule 5 bestromt, bewegt sich der erste Anker 9 mit der daran befestigten Ventilnadel 13 solange in Öffnungsrichtung, bis der Anschlagkörper 18 am zweiten Anker 10 anschlägt. Da die zweite Magnetspule 6 bestromt ist und den zweiten Anker 10 am Düsenkörper 3 hält, wird das Brennstoffeinspritzventil 1 nur bis zur unteren Schaltstellung geöffnet. Dadurch kann eine kleinere Brennstoffmenge zugemessen werden, welche zudem über eine andere Strahlcharakteristik, z. B. eine andere Winkelverteilung, verfügt.

Zum Schließen des Brennstoffeinspritzventils 1 aus der oberen Schaltstellung werden beide Magnetspulen 5 und 6 bestromt. Wenn der die erste Magnetspule 5 erregende Strom abgeschaltet wird, wirkt sowohl die Kraft der ersten Rückstellfeder 11 als auch die Magnetkraft der zweiten Magnetspule 6 in Schließrichtung. Das Brennstoffeinspritzventil 1 wird dadurch aktiv aus dem geöffneten in den geschlossenen Zustand geschaltet.

Wird der Erregerstrom der ersten Magnetspule 5 abgeschaltet, wird der erste Anker 9 mit der mit ihm verbundenen Ventilnadel 13 sowie der zweite Anker 10 durch die Rückstellkraft der ersten Rückstellfeder 11 aus der oberen Schaltstellung in Schließrichtung beschleunigt, wobei die Magnetkraft der zweiten Magnetspule 6 den zweiten Anker 10 aktiv in Schließrichtung zieht. Durch das Zusammenwirken der verschiedenen Kräfte und die Tatsache, daß die erste Rückstellfeder 11 nur den ersten Anker 9 und die Ventilnadel 13, nicht jedoch den zweiten Anker 10 in Schließrichtung beschleunigen muß, werden kurze Schließzeiten erzielt.

Das Schließen des Brennstoffeinspritzventils 1 aus der unteren Schaltstellung erfolgt ebenfalls durch Ausschalten des die erste Magnetspule 5 erregenden Stromes. Da der zweite Anker 10 am Düsenkörper 3 durch die bestromte zweite Magnetspule 6 in Anlage gehalten wird, muß lediglich der erste Anker 9 mit der Ventilnadel 13 in Schließrichtung beschleunigt werden. Hier bewirkt die Rückstellkraft der ersten Rückstellfeder 11 das Schließen des Brennstoffeinspritzventils 1. Durch den geringen Hub kann der Ventilschließkörper 14 schnell in die Ausgangslage zurückgestellt werden, was ebenfalls kurze Schließzeiten zur Folge hat.

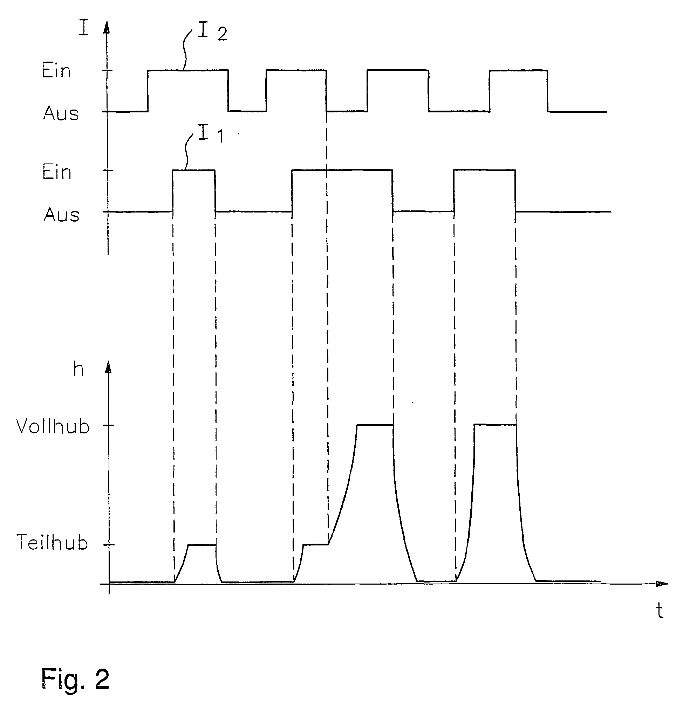

Fig. 2 zeigt zur Verdeutlichung der Schaltvorgänge den bestromten und unbestromten Zustand der ersten Magnetspule 5 und der zweiten Magnetspule 6 in Verbindung mit einem Diagramm, welches den Ventilhub h als Funktion der Zeit t zeigt. Der elektrische Strom durch die erste Magnetspule 5 ist mit I₁ und der elektrische Strom durch die zweite Magnetspule 6 ist mit I₂ bezeichnet. Im unteren Drehzahlbereich der Brennkraftmaschine, wenn nur eine kleine Brennstoffmenge zugemessen werden soll, wird das Brennstoffeinspritzventil 1 in die untere Schaltstellung geschaltet. Dazu wird zunächst die zweite Magnetspule 6, welche den zweiten Anker 10 am Düsenkörper 3 hält, bestromt. Dadurch kann bei Bestromen der ersten Magnetspule 5 der erste Anker 9 mit der daran befestigten Ventilnadel 13 nur so weit angehoben werden, bis der Anschlagkörper 18 am zweiten Anker 10 anschlägt. Das Schließen des Brennstoffeinspritzventils 1 aus der unteren Schaltstellung erfolgt durch das Abschalten des die erste Magnetspule 5 erregenden Stromes I₁ (Diagramm links).

Soll die obere Schaltstellung angesteuert werden, bleibt die zweite Magnetspule 6 unbestromt, während die erste Magnetspule 5 erregt wird. Dadurch kann der erste Anker 9 die Ventilnadel 13 so weit anheben, bis der erste Anker 9 am Kern 2 anschlägt und der erste Arbeitsspalt 19 geschlossen ist. Zum Beenden des Öffnungsvorgangs wird auch die zweite Magnetspule 6 bestromt. Der erste Anker 9 mit der daran befestigten Ventilnadel 13 wird jedoch noch am Kern 2 gehalten. Wird nun der die erste Magnetspule 5 erregende Strom I₁ abgeschaltet, baut sich das Magnetfeld der ersten Magnetspule 5 ab, und der erste Anker 9 fällt vom Kern 2 ab. Der erste Anker 9 wird durch die Rückstellkraft der ersten Rückstellfeder 11 und durch die Magnetkraft der zweiten Magnetspule 6 in die Schließposition zurückgeschaltet. Der Schließvorgang kann somit erheblich schneller ablaufen, da zu der Rückstellkraft der ersten Rückstellfeder 11 noch die Magnetkraft der zweiten Magnetspule 6 für den Schließvorgang zur Verfügung steht (Diagramm rechts).

Soll das Brennstoffeinspritzventil 1 zuerst in die untere Schaltstellung und dann in die obere Schaltstellung geschaltet werden, werden die Magnetspulen 5 und 6 folgendermaßen bestromt: zunächst wird die zweite Magnetspule 6 erregt, um den zweiten Anker 10 am Düsenkörper 3 zu halten. Wird nun die erste Magnetspule 5 bestromt, bewegt sich der erste Anker 9 mit der Ventilnadel 13 solange in Hubrichtung, bis der Anschlagkörper 18 am zweiten Anker 10 anschlägt. Damit ist die erste, stabile Schaltstellung erreicht. Die erste Magnetspule 5 und die zweite Magnetspule 6 sind bestromt. Um aus der unteren, ersten Schaltstellung in die obere, zweite Schaltstellung zu schalten, wird der die zweite Magnetspule 6 erregende Strom I₂ ausgeschaltet. Dadurch wird das Magnetfeld, welches den zweiten Anker 10 am Düsenkörper 3 hält, abgebaut, wodurch der erste Anker 9 unter Mitnahme des zweiten Ankers 10 weiter in das Magnetfeld der ersten Magnetspule 5 hineingezogen werden kann, bis der erste Arbeitsspalt 19 geschlossen ist. Wenn die obere Schaltstellung erreicht ist, ist lediglich die erste Magnetspule 5 bestromt.

Zum Schließen des Brennstoffeinspritzventils 1 wird nun wieder die zweite Magnetspule 6 bestromt. Nach genügendem Aufbau des Magnetfeldes der zweiten Magnetspule 6 wird die erste Magnetspule 5 abgeschaltet. Dadurch kehrt das Brennstoffeinspritzventil 1 in die Ausgangsstellung zurück (Diagramm Mitte).

Die Erfindung ist nicht auf das dargestellte Ausführungsbeispiel beschränkt und auch bei einer Vielzahl anderer Bauweisen von Brennstoffeinspritzventilen 1 realisierbar.

## Patentansprüche

1. Brennstoffeinspritzventil (1), insbesondere Einspritzventil für Brennstoffeinspritzanlagen von Brennkraftmaschinen, mit einer mit einem ersten Anker (9) zusammenwirkenden ersten Magnetspule (5), einer mit dem ersten Anker (9) kraftschlüssig in Verbindung stehenden Ventilnadel (13) zur Betätigung eines Ventilschließkörpers (14), der zusammen mit einer Ventilsitzfläche (15) einen Dichtsitz bildet, und einer zweiten Magnetspule (6), wobei der erste Anker (9) in einer Schließrichtung von einer ersten Rückstellfeder (11) beaufschlagt wird und ein zweiter Anker (10) mit der zweiten Magnetspule (6) so zusammenwirkt, dass bei Bestromen der ersten Magnetspule (5) und der zweiten Magnetspule (6) ein mit der Ventilnadel (13) verbundener Anschlagkörper (18) an dem zweiten Anker (10) anschlägt,
**dadurch gekennzeichnet,**
**dass** die erste Magnetspule (5) und die zweite Magnetspule (6) sowie der erste Anker (9) und der zweite Anker (10) derart angeordnet sind, dass bei Bestromen der ersten Magnetspule (5) der erste Anker (9) entgegen der Schließrichtung angezogen wird während bei Bestromen der zweiten Magnetspule (6) der zweite Anker (10) in Schließrichtung angezogen wird.

2. Brennstoffeinspritzventil nach Anspruch 1,
**dadurch gekennzeichnet,**
**daß** eine zwischen dem ersten Anker (9) und dem zweiten Anker (10) eingespannte zweite Rückstellfeder (12) den zweiten Anker (10) in Schließrichtung beaufschlagt.

3. Brennstoffeinspritzventil nach Anspruch 1 oder 2,
**dadurch gekennzeichnet,**
**daß** die Federkraft der zweiten Rückstellfeder (12) wesentlich kleiner als die Federkraft der ersten Rückstellfeder (11) ist.

4. Brennstoffeinspritzventil nach einem der Ansprüche 1 bis 3,
**dadurch gekennzeichnet,**
**daß** zwischen einem Kern (2) und dem erstem Anker (9) ein erster Arbeitsspalt (19) und zwischen dem Anschlagkörper (18) und dem zweiten Anker (10) ein zweiter Arbeitsspalt (20) ausgebildet ist, wobei der erste Arbeitsspalt (19) größer als der zweite Arbeitsspalt (20) ist.

5. Brennstoffeinspritzventil nach Anspruch 4,
**dadurch gekennzeichnet,**
**daß** das Brennstoffeinspritzventil (1) durch Schließen des zweiten Arbeitsspalts (20) infolge eines Bestromens der ersten Magnetspule (5) und der zweiten Magnetspule (6) in eine erste Schaltstellung mit einem ersten Öffnungsquerschnitt schaltbar ist.

6. Brennstoffeinspritzventil nach Anspruch 5,
**dadurch gekennzeichnet,**
**daß** das Brennstoffeinspritzventil (1) durch Schließen des ersten Arbeitsspalts (19) infolge eines Bestromens nur der ersten Magnetspule (5) in eine zweite Schaltstellung mit einem zweiten Öffnungsquerschnitt schaltbar ist.

7. Brennstoffeinspritzventil nach Anspruch 5 und 6,
**dadurch gekennzeichnet,**
**daß** der erste Öffnungsquerschnitt kleiner als der zweite Öffnungsquerschnitt ist.

8. Brennstoffeinspritzventil nach einem der Ansprüche 4 bis 7,
**dadurch gekennzeichnet,**
**daß** das Brennstoffeinspritzventil (1) in der zweiten Schaltstellung einen Brennstoffstrahl abspritzt, dessen Strahlbild sich von dem Strahlbild des in der ersten Schaltstellung abgespritzten Brennstoffstrahls unterscheidet.

9. Verfahren zum Betätigen eines Brennstofieinspritzventils (1), insbesondere eines Einspritzventils für Brennstoffeinspritzanlagen von Brennkraftmaschinen, mit einer mit einem ersten Anker (9) zusammenwirkenden ersten Magnetspule (5), einer mit dem ersten Anker (9) kraftschlüssig in Verbindung stehenden Ventilnadel (13) zur Betätigung eines Ventilschließkörpers (14), der zusammen mit einer Ventilsitzfläche (15) einen Dichtsitz bildet, und einer zweiten Magnetspule (6), wobei der erste Anker (9) in einer Schließrichtung von einer ersten Rückstellfeder (11) beaufschlagt wird, und einem zweiten Anker (10) mit der zweiten Magnetspule (6) so zusammenwirkt, dass bei Bestromen der ersten Magnetspule (5) und der zweiten Magnetspule (6) ein mit der Ventilnadel (13) verbundener Anschlagkörper (18) an dem zweiten Anker (10) anschlägt, wobei die erste Magnetspule (5) und die zweite Magnetspule (6) sowie der erste Anker (9) und der zweite Anker (10) derart angeordnet sind, dass bei Bestromen der ersten Magnetspule (5) der erste Anker (9) entgegen der Schließrichtung angezogen wird während bei Bestromen der zweiten Magnetspule (6) der zweite Anker (10) in Schließrichtung angezogen wird,
mit folgenden Verfahrensschritten:
- Schaltert des Brennstoffeinspritzventils (1) durch gemeinsames Bestromen der ersten Magnetspule (5) und der zweiten Magnetspule (6) in eine erste Schaltstellung mit einem ersten Öffnungsquerschnitt, oder
- Schalten des Brennstoffeinspritzventils (1) durch Bestromen nur der ersten Magnetspule (5) in eine zweite Schaltstellung mit einem gegenüber dem ersten Öffnungsquerschnitt größeren zweiten Öffnungsquerschnitt.

10. Verfahren nach Anspruch 9,
**dadurch gekennzeichnet,**
**daß** das Brennstoffeinspritzventil (1) aus der ersten Schaltstellung durch Abschalten des die zweite Magnetspule (6) erregenden Stromes in die zweite Schaltstellung geschaltet wird.

11. Verfahren nach Anspruch 9 oder 10,
**dadurch gekennzeichnet,**
**daß** das Brennstoffeinspritzventil (1) durch Bestromen der in Schließrichtung wirkenden zweiten Magnetspule (6) und Abschalten des die erste Magnetspule (5) erregenden Stromes aus der zweiten Schaltstellung in eine Schließstellung geschaltet wird.

## Claims

1. Fuel injection valve (1), in particular injection valve for fuel injection systems of internal combustion engines, having a first solenoid (5) which interacts with a first armature (9), a valve needle (13) which is connected in a frictionally locking fashion to the first armature (9) and has the purpose of activating a valve closing element (14) which, together with a valve seat face (15) forms a sealing seat, and a second solenoid (6), a first restoring spring (11) acting on the first armature (9) in a closing direction, and a second armature (10) interacting with the second solenoid (6) in such a way that when the first solenoid (5) and the second solenoid (6) are energized a stop element (18) which is connected to the valve needle (13) strikes against the second armature (10), **characterized in that** the first solenoid (5), the second solenoid (6), the first armature (9) and the second armature (10) are arranged in such a way that when the first solenoid (5) is energized the first armature (9) is attracted in the opposite direction to the closing direction, while when the second solenoid (6) is energized the second armature (10) is attracted in the closing direction.

2. Fuel injection valve according to Claim 1, **characterized in that** a second restoring spring (12) which is clamped in between the first armature (9) and the second armature (10) acts on the second armature (10) in the closing direction.

3. Fuel injection valve according to Claim 1 or 2, **characterized in that** the spring force of the second restoring spring (12) is significantly smaller than the spring force of the first restoring spring (11).

4. Fuel injection valve according to one of Claims 1 to 3, **characterized in that** a first working gap (19) is formed between a core (2) and the first armature (9), and a second working gap (20) is formed between the stop element (18) and the second armature (10), with the first working gap (19) being larger than the second working gap (20).

5. Fuel injection valve according to Claim 4, **characterized in that** the fuel injection valve (1) can be switched into a first switched position with a first opening cross section by closing the second working gap (20) as a result of the first solenoid (5) and the second solenoid (6) being energized.

6. Fuel injection valve according to Claim 5, **characterized in that** the fuel injection valve (1) can be switched into a second switching position with a second opening cross section by closing the first working gap (19) as a result of only the first solenoid (5) being energized.

7. Fuel injection valve according to Claims 5 and 6, **characterized in that** the first opening cross section is smaller than the second opening cross section.

8. Fuel injection valve according to one of Claims 4 to 7, **characterized in that** in the second switched position the fuel injection valve (1) ejects a fuel jet whose jet pattern differs from the jet pattern of the fuel jet ejected in the first switched position.

9. Method for activating a fuel injection valve (1), in particular an injection valve for fuel injection systems of internal combustion engines, having a first solenoid (5) which interacts with a first armature (9), a valve needle (13) which is connected in a frictionally locking fashion to the first armature (9) and has the purpose of activating a valve closing element (14) which, together with a valve seat face (15) forms a sealing seat, and a second solenoid (6), a first restoring spring (11) acting on the first armature (9) in a closing direction, and a second armature (10) interacting with the second solenoid (6) in such a way that when the first solenoid (5) and the second solenoid (6) are energized a stop element (18) which is connected to the valve needle (13) strikes against the second armature (10), the first solenoid (5), the second solenoid (6), the first armature (9) and the second armature (10) being arranged in such a way that when the first solenoid (5) is energized the first armature (9) is attracted in the opposite direction to the closing direction, while when the second solenoid (6) is energized the second armature (10) is attracted in the closing direction, having the following method steps:
- switching the fuel injection valve (1) into a first switched position with a first opening cross section by jointly energizing the first solenoid (5) and the second solenoid (6), or
- switching the fuel injection valve (1) into a second switched position with a second opening cross section which is greater than the first opening cross section by energizing only the first solenoid (5).

10. Method according to Claim 9, **characterized in that** the fuel injection valve (1) is switched into the second switched position from the first switched position by switching off the current which excites the second solenoid (6).

11. Method according to Claim 9 or 10, **characterized in that** the fuel injection valve (1) is switched out of the second switched position into a closed position by energizing the second solenoid (6) which acts in the closing direction and by switching off the current which excites the first solenoid (5).

## Revendications

1. Injecteur de carburant (1), en particulier, injecteur pour installations d'injection de carburant de moteurs à combustion interne, comportant une première bobine électromagnétique (5) coopérant avec un premier induit (9), une aiguille de soupape (13) en liaison de forme avec le premier induit (9) pour commander un obturateur de soupape (14), qui forme un siège d'étanchéité conjointement avec une surface formant le siège de soupape (15), et une seconde bobine électromagnétique (6), le premier induit (9) étant sollicité dans une direction de fermeture par un premier ressort de rappel (11) alors qu'un second induit (10) coopère avec la seconde bobine électromagnétique, de sorte que lors de l'alimentation de la première bobine électromagnétique (5) et de la seconde bobine électromagnétique (6) un corps de butée (18) relié à une aiguille de soupape (13) vient en butée contre le second induit (10),
**caractérisé en ce que**
la première bobine électromagnétique (5) et la seconde bobine électromagnétique (6) ainsi que le premier induit (9) et le second induit (10) sont installés pour que lors de l'alimentation de la première bobine électromagnétique (5), le premier induit (9) soit attiré en sens inverse de la direction de fermeture tandis que lors de l'alimentation de la seconde bobine électromagnétique (6) le second induit (10) soit attiré dans la direction de fermeture.

2. Injecteur de carburant selon la revendication 1,
**caractérisé en ce que**
un second ressort de rappel (12), encastré entre le premier induit (9) et le second induit (10) sollicite le second induit (10) dans la direction de fermeture.

3. Injecteur de carburant selon la revendication 1 ou 2,
**caractérisé en ce que**
la force de ressort du second ressort de rappel (12) est sensiblement plus petite que la force de ressort du premier ressort de rappel (11).

4. Injecteur de carburant selon l'une quelconque des revendications 1 à 3,
**caractérisé par**
un premier intervalle de travail (19) entre un noyau (2) et le premier induit (9) et un second intervalle de travail (20) entre le corps de butée (18) et le second induit (10), le premier intervalle de travail (19) étant plus grand que le second intervalle de travail (20).

5. Injecteur de carburant selon la revendication 4,
**caractérisé en ce que**
l'injecteur de carburant (1) peut être commuté par la fermeture de la seconde intervalle de travail (20) à la suite d'une alimentation de la première bobine électromagnétique (5) et de la seconde bobine électromagnétique (6) dans une première position de commutation avec une première section transversale d'ouverture.

6. Injecteur de carburant selon la revendication 5,
**caractérisé en ce que**
l'injecteur de carburant (1) peut être commuté par la fermeture de la première intervalle de travail (19) à la suite d'une alimentation uniquement de la première bobine électromagnétique (5) dans une seconde position de commutation avec une seconde section transversale d'ouverture.

7. Injecteur de carburant selon la revendication 5 et 6,
**caractérisé en ce que**
la première section transversale d'ouverture est plus petite que la seconde section transversale d'ouverture.

8. Injecteur de carburant selon l'une quelconque des revendications 4 à 7,
**caractérisé en ce que**
l'injecteur de carburant (1) éjecte un jet de carburant dans la seconde position de commutation dont la forme de jet se distingue de la forme de jet du carburant éjecté dans la première position de commutation.

9. Procédé de commande d'un injecteur de carburant (1), en particulier, pour installations d'injection de carburant pour moteurs à combustion interne, comportant une première bobine électromagnétique (5) coopérant avec un premier induit, une aiguille de soupape (13) en liaison de forme avec un premier induit (9) pour commander un obturateur de soupape (14), qui forme un siège d'étanchéité conjointement avec une surface formant le siège de soupape (15), et une seconde bobine électromagnétique (6), dans lequel le premier induit (9) étant sollicité dans une direction de fermeture par un premier ressort de rappel (11), alors qu'un second induit (10) coopère avec la seconde bobine électromagnétique (6), de sorte que lors de l'alimentation de la première bobine électromagnétique (5) et de la seconde bobine électromagnétique (6) un corps de butée (18) relié à l'aiguille de soupape (13) vienne en butée contre le second induit (10), la première bobine électromagnétique (5) et la seconde bobine électromagnétique (6) ainsi que le premier induit (9) et le second induit (10) étant montés pour que lors de l'alimentation de la première bobine électromagnétique (5) le premier induit (9) soit attiré en sens inverse à la direction de fermeture tandis que lors de l'alimentation de la seconde bobine électromagnétique (6) le second induit (10) soit attiré dans la direction de fermeture, comportant les étapes consistant à :
- commuter l'injecteur de carburant (1) par l'alimentation commune de la première bobine électromagnétique (5) et de la seconde bobine électromagnétique (6) dans une première position de commutation avec une première section transversale d'ouverture, ou
- commuter l'injecteur de carburant (1) par l'alimentation uniquement de la première bobine électromagnétique (5) dans une seconde position de commutation avec une seconde section transversale d'ouverture plus grande que la première section transversale d'ouverture.

10. Procédé selon la revendication 9,
**caractérisé en ce que**
l'injecteur de carburant (1) est commuté depuis la première position de commutation par la coupure du courant excitant la seconde bobine électromagnétique (5) dans la seconde position de commutation.

11. Procédé selon la revendication 9 ou 10,
**caractérisé en ce que**
l'injecteur de carburant (1) est commuté par l'alimentation de la seconde bobine électromagnétique (6) agissant dans la direction de fermeture et la coupure du courant excitant la seconde bobine électromagnétique (5) dans la seconde position de commutation depuis la seconde position de commutation à une position de fermeture.
